# EUROPÄISCHE PATENTANMELDUNG

(11) **EP 1 136 300 A1**
(43) Veröffentlichungstag der Anmeldung: **26.09.2001**
(21) Anmeldenummer: 01104965.7
(22) Anmeldetag: 01.03.2001
(51) Int. Cl.: B60K 15/04, B60K 15/05

(54) **Verschlussdeckel für einen Tankstutzen**

(30) Priorität: 18.03.2000 DE 10013587
(71) Anmelder: Bayerische Motoren Werke Aktiengesellschaft, 80809 München (DE)
(72) Erfinder: Strohmayer, Manfred, 85540 Haar (DE)

(57) **Zusammenfassung**

Die Erfindung betrifft einen Verschlußdeckel (1) für einen Tankstutzen, insbesondere eines Kraftfahrzeuges, der mittels einer Drehbewegung auf den Tankstutzen aufbrinbar oder von diesem entfernbar ist und an welchem in der Drehachse (2) des Verschlußdeckels an der Deckelaußenseite (1b) ein Halteband (4) verdrehbar befestigt ist, welches mit dem Verschlußdeckel ohne Verwendung eines eigenständigen Befestigungselementes verbunden ist. Bevorzugt ist die Befestigung des Haltebandes (4) am Verschlußdeckel in Form einer Nut-Nase-Verbindung ausgebildet, wozu in der Deckelwand eine kreisförmige Durchstecköffnung (3) vorgesehen ist, deren Rand die Nase der Nut-Nase-Verbindung bildet, und in die das Halteband (4) mit einem eine Ringnut aufweisenden Einsteckabschnitt (4a) eingesteckt ist.

## Beschreibung

Die Erfindung betrifft einen Verschlußdeckel für einen Tankstutzen, insbesondere eines Kraftfahrzeuges, der mittels einer Drehbewegung auf den Tankstutzen aufbrinbar oder von diesem entfernbar ist und an welchem in der Drehachse des Verschlußdeckels an der Deckelaußenseite ein Halteband verdrehbar befestigt ist. Dabei kann es sich sowohl um einen auf den Tankstutzen aufzuschraubenden Verschlußdeckel handeln, als auch um einen solchen, der mit dem Tankstutzen nach Art eines Bajonettverschlusses zusammenwirkt. Wesentlich ist, daß dieser Verschlußdeckel zum Aufbringen auf bzw. zum Entfernen vom Tankstutzen gegenüber diesem verdreht wird. Bezüglich des besagten, am Verschlußdeckel verdrehbar befestigten Haltebandes wird zum technischen Umfeld beispielshalber auf die US 5,720,409 verwiesen.

Tankstutzen-Verschlußdeckel mit Haltebändern sind in unterschiedlichen Ausführungsformen bekannt, so bspw. mit einem drehbaren Halteband in Form eines umlaufende Ringes im Deckelgehäuse oder in einer Variante, bei welcher das Halteband um die Achse eines Befestigungsnietes am Griffkopf des Deckels verdrehbar ist. Stets soll dabei der vom Tankstutzen entfernte Verschlußdeckel mittels des Haltebandes unverlierbar gehalten werden, wobei gleichzeitig eine einfache Bedienbarkeit des Verschlußdeckels bei höchster Funktionssicherheit desselben gewährleistet sein soll.

Die erstgenannte bekannte Ausführungsform mit dem ein Zusatzteil bildenden umlaufenden Ring bietet bspw. im Falle eines Fahrzeug-Crash's eine zusätzliche Angriffsfläche für eine Zerstörung des Verschlußdeckels und daraus resultierender Undichtigkeit. Die zweitgenannte bekannte Ausführungsform, bei welcher das Halteband mittels eines Befestigungsnietes drehbar am Verschlußdeckel angebunden ist, ist hinsichtlich der Fertigung relativ aufwendig.

Einen demgegenüber verbesserten Verschlußdeckel nach dem Oberbegriff des Anspruchs 1 aufzuzeigen, ist Aufgabe der vorliegenden Erfindung.
Die Lösung dieser Aufgabe ist dadurch gekennzeichnet, daß das Halteband mit dem Gehäuse oder der Deckelwand des Verschlußdeckels ohne Verwendung eines eigenständigen Befestigungselementes verbunden ist. Vorteilhafte Aus- und Weiterbildungen sind Inhalt der Unteransprüche.

Erfindungsgemäß wird eine funktionssichere Befestigung des Haltebandes vorgeschlagen, bei welcher dieses - da an der Deckelaußenseite befestigt - keine negativen Auswirkungen auf die Dichtheit des Tankstutzen-Verschlusses haben kann. Gleichzeitig ist kein aufwendiges, separates Bauteil zur drehbaren Befestigung des Haltebandes am Verschlußdeckel erforderlich. Hierfür kann in einer bevorzugten Ausführungsform in der Dekkelwand eine kreisförmige Durchstecköffnung vorgesehen sein, deren Rand die Nase einer Nut-Nase-Verbindung bildet, und in die das Halteband mit einem eine Ringnut aufweisenden Einsteckabschnitt eingesteckt ist.

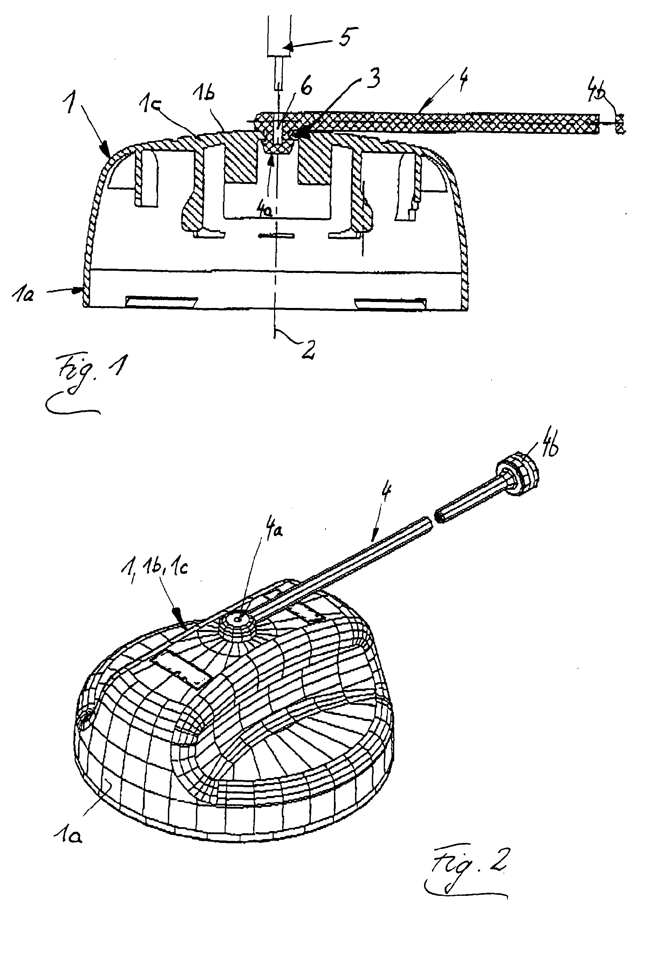

Im folgenden wird die Erfindung anhand eines bevorzugten Ausführungsbeispieles weiter erläutert, wobei die beigefügte **Figur 1** den Querschnitt eines erfindungsgemäßen Verschlußdeckels zeigt, von dem in **Figur 2** eine räumliche Ansicht dargestellt ist. Erfindungswesentlich können dabei sämtliche näher beschriebenen Merkmale sein.

Mit der Bezugsziffer 1 ist ein Verschlußdeckel für den Tankstutzen eines Kraftfahrzeug-Kraftstofftanks bezeichnet, der wie üblich mit seinem in den Figuren unteren Randabschnitt 1a mittels einer Drehbewegung auf den nicht gezeigten Stutzen aufgebracht (bspw. aufgeschraubt oder über einen Bajonettverschluss befestigt) werden kann und diesen danach dicht verschließt, und zwar quasi nach oben hin mit der die Deckelaußenseite 1b bildenden Deckelwand 1c.

Der Verschlußdeckel 1 ist auf dem nicht gezeigten Tankstutzen um eine Drehachse 2 verdrehbar, die bezüglich des Randabschnittes 1a des Deckels 1 zentral und dabei zur oberen Deckelwand 1c bzw. Deckelaußenseite 1b im wesentlichen senkrecht verläuft. Im Schnittpunkt der Drehachse 2 mit der oberen Deckelwand 1c ist in dieser eine kreisförmige Durchstecköffnung 3 vorgesehen, deren Rand die Nase einer Nut-Nase-Verbindung für ein drehbar am Verschlußdeckel 1 bzw. an dessen Gehäuse oder an der Deckelwand 1c befestigtes Halteband 4 bildet. Dieses Halteband 4 ist dabei mit seinem sog. Einsteckabschnitt 4a in die Durchstecköffnung 3 eingesteckt, derart, daß der Rand der Durchstecköffnung 3 in eine Ringnut am Einsteckabschnitt 4a eingreift.

Klar ersichtlich wird aus dieser Schilderung sowie figürlichen Darstellung, daß der Verschlußdeckel 1 gegenüber dem auf der Deckelaußenseite 1b liegenden Halteband 4 bzw. gegenüber dessen Einsteckabschnitt 4a um die Drehachse 2 verdrehbar ist. Dies ist aber zur Erfüllung seiner Funktion auch erforderlich, denn das flexible Halteband 4 ist mit seinem dem Einsteckabschnitt 4a gegenüberliegenden Ende 4b ortsfest angebunden, um den vom Tankstutzen entfernten Verschlußdeckel 1 unverlierbar halten zu können. Trotz des ortsfest angebundenen Haltebandes 4 soll aber der Verschlußdekkel 1 auf den Tankstutzen aufschraubbar sein.

Wie ebenfalls klar ersichtlich ist, ist die eine Verdrehung ermöglichende Nut-Nase-Verbindung zwischen dem Halteband 4 und dem Verschlußdeckel 1 besonders einfach ausgebildet, indem das Halteband 4 mit seinem Einsteckabschnitt 4a von der Deckelaußenseite 1b her einfach in die Durchstecköffnung 3 eingesteckt werden kann und danach sicher in dieser gehalten ist. Dieses Einstecken erfolgt in Richtung der Drehachse 2 mittels eines als Dorn ausgebildeten Montagewerkzeuges 5, das in eine optisch verdeckte Ansetzfläche 6 in Form eines Sackloches im Einsteckabschnit 4a einsetzbar ist. Mittels des in dieses Sackloch bzw. in diese vorteilhafterweise optische verdeckte Ansetzfläche 6 eingesetzten Montagewerkzeuges 5 kann ausreichender Druck auf den Einsteckabschnitt 4a des noch nicht am Verschlußdeckel 1 montierten Haltebandes 4 aufgebracht werden, um diesen dann unter elastischer Verformung (analog einer Clipsverbindung) in die Durchstecköffnung 3 eindrücken zu können.

Das Halteband 4 ist somit einfach am Verschlußdeckel 1 bzw. an dessen Gehäuse oder Deckelwand 1c montierbar, ggf. einfach austauschbar und beeinträchtigt dessen Funktion in keiner Weise. Vorteilhafterweise kann dieses Halteband 4 beim Aufbringen des Verschlußdeckels 1 auf den Tankstutzen auch nicht verklemmt werden, wobei noch darauf hingewiesen sei, daß selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

## Patentansprüche

1. Verschlußdeckel für einen Tankstutzen, insbesondere eines Kraftfahrzeuges, der mittels einer Drehbewegung auf den Tankstutzen aufbrinbar oder von diesem entfernbar ist und an welchem in der Drehachse (2) des Verschlußdeckels (1) an der Deckelaußenseite (1b) ein Halteband (4) verdrehbar befestigt ist,
**dadurch gekennzeichnet, daß** das Halteband (4) mit dem Gehäuse oder der Deckelwand (1c) des Verschlußdeckels (1) ohne Verwendung eines eigenständigen Befestigungselementes verbunden ist.

2. Verschlußdeckel nach Anspruch 1,
**dadurch gekennzeichnet, daß** die Befestigung des Haltebandes (4) an der Deckelwand (1c) des Verschlußdeckels (1) in Form einer Nut-Nase-Verbindung ausgebildet ist.

3. Verschlußdeckel nach Anspruch 2,
**gekennzeichnet durch** eine in der Deckelwand (1c) vorgesehene kreisförmige Durchstecköffnung (3), deren Rand die Nase der Nut-Nase-Verbindung bildet, und in die das Halteband (4) mit einem eine Ringnut aufweisenden Einsteckabschnitt (4a) eingesteckt ist.

4. Verschlußdeckel nach einem der vorangegangenen Ansprüche,
**gekennzeichnet durch** eine am Halteband (4) vorgesehene, optisch verdeckte Ansetzfläche (6) für ein Montagewerkzeug (5) zum Befestigen des Haltebandes (4) am Verschlußdeckel (1).
